# EUROPÄISCHE PATENTSCHRIFT

(11) **EP 1 944 191 B1**
(45) Veröffentlichungstag und Bekanntmachung des Hinweises auf die Patenterteilung: **10.04.2013**
(21) Anmeldenummer: 08007356.2
(22) Anmeldetag: 18.01.2006
(51) Int. Cl.: B60K 35/00, B62D 1/06, G08B 21/06

(54) **Lenkradbaugruppe für ein Kraftfahrzeug**
Steering wheel assembly for a motor vehicle
Module à volant de direction pour véhicule automobile

(30) Priorität: 19.01.2005 DE 102005003187; 19.01.2005 US 644575 P; 10.11.2005 DE 102005054640
(43) Veröffentlichungstag der Anmeldung: 16.07.2008
(62) Teilanmeldung aus: 06705834.7
(73) Patentinhaber: Takata AG, 63743 Aschaffenburg (DE)
(72) Erfinder: Prost-Fin, Marc, 13187 Berlin (DE); Keudel, Frederike, 79541 Lörrach-Brombach (DE); Neumann, Delf, 12555 Berlin (DE)
(74) Vertreter: Baumgärtel, Gunnar

(56) Entgegenhaltungen:
- EP-A- 1 302 372
- EP-A- 1 484 234
- WO-A-98/03365
- DE-A1- 3 912 359
- DE-A1- 3 917 613
- DE-A1- 10 109 680
- DE-A1- 10 241 267
- DE-A1- 10 303 010
- DE-A1- 10 352 733
- DE-C1- 19 646 104
- DE-U1- 20 014 731
- FR-A- 2 744 976
- US-A- 5 197 562
- US-A- 5 477 457
- US-A1- 2004 209 594

## Beschreibung

Die Erfindung betrifft eine Lenkradbaugruppe für ein Kraftfahrzeug.

Derartige Lenkradbaugruppen weisen zumindest ein Lenkrad auf, das in der Regel mit einem um eine Lenkachse drehbar gelagerten Nabenkörper versehen ist, der über zumindest eine Speiche mit einem Lenkradkranz verbunden ist, der wiederum den Nabenkörper bzw. die Lenkachse (quer zur Lenkachse) zumindest abschnittsweise umläuft. Der Lenkradkranz kann hierbei insbesondere in sich geschlossen ausgebildet sein, so dass er den Nabenkörper ringförmig umläuft.

Eine Lenkradbaugruppe nach dem Oberbegriff des Anspruchs 1 ist aus dem Dokument DE 200 14 731 U1 bekannt. Das Dokument DE 200 14 731 U1 beschreibt ein Lenkrad für Kraftfahrzeuge, im wesentlichen bestehend aus einem Nabenteil zum Anschluss an die Lenksäule oder einem Adapterteil sowie vom Nabenteil abgehenden Speichen, an denen ein Lenkradkranz angeschlossen ist, wobei der Lenkradkranz zumindest teilweise aus Schaumstoff besteht oder mit Schaumstoff oder einem ähnlichen Werkstoff ummantelt ist. In das Schaumstoffmaterial oder das ähnliche Material sind ein Display mit LCD-Anzeige, insbesondere in Form einer Folie, oder eine Anzahl von Leuchtdioden oder Leuchtdioden-Segmentanzeigen oder andere elektrische Anzeigeteile eingebettet, wobei die so gebildeten Anzeigeteile dem Blickfeld des Lenkers des Kraftfahrzeuges zugewandt sind.

Der Erfindung liegt das Problem zu Grunde, eine Lenkradbaugruppe für ein Kraftfahrzeug bereitzustellen, die den Komfort und die Sicherheit eines Kraftfahrzeuges erhöht.

Dieses Problem wird durch eine Lenkradbaugruppe mit den Merkmalen des Anspruchs 1 gelöst.

Die Lenkradbaugruppe umfasst ein Lenkrad und eine am Lenkrad angeordnete Anzeigeeinrichtung, die mit einer an dem Kraftfahrzeug anzuordnenden Sensoreinrichtung zum Ermitteln mindestens einer Zustandsgröße eines Kraftfahrzeuges in Wirkverbindung steht und die zum Anzeigen der mittels der Sensoreinrichtung ermittelten Zustandsgröße vorgesehen ist, wobei mit der Sensoreinrichtung eine Funktionseinheit des Kraftfahrzeuges zum Weiterleiten oder Umwandeln von Energie und/oder Informationen gekoppelt sein kann, die dazu eingerichtet und vorgesehen ist, einem Fahrer über die Anzeigeeinrichtung einen Vorschlag für eine Einstellung einer Zustandsgröße des Kraftfahrzeuges anzuzeigen, und wobei der Funktionseinheit eine Betätigungseinheit des Kraftfahrzeuges zugeordnet sein kann, mit der gemäß des Vorschlages der Funktionseinheit die Zustandsgröße einstellbar ist.

Die Anzeigeeinrichtung ist als eine optische Anzeige ausgebildet, die einen Bildschirm aufweist. Die Anzeigeeinrichtung ist an einem Lenkradkranz des Lenkrades angeordnet, der eine Lenkachse des Lenkrades (quer zur Lenkachse) zumindest abschnittsweise umläuft. Die Lenkradbaugruppe weist einen um die Lenkachse drehbaren Nabenkörper auf, der über zumindest eine Speiche mit dem Lenkradkranz des Lenkrades verbunden ist. Dabei ist ein Bereich des Lenkradkranzes vorgesehen, der die zumindest eine Anzeigeeinrichtung umfasst. Erfingdungsgemäß ist der Bildschirm entlang des Lenkradkranzes des Lenkrades zwischen zwei Anzeigeelementen der Anzeigeeinrichtung angeordnet, die jeweils ein LED-Feld oder mehrere LED-Felder umfassen, wobei der Lenkradkranz in dem Bereich eine Verbreiterung aufweist, die durch einen in Richtung auf den Nabenkörper vorstehenden Fortsatz des Lenkradkranzes gebildet ist.

Hierdurch wird das erfindungsgemäße Problem auf vorteilhafte Weise gelöst. Bei der erfindungsgemäßen Lenkradbaugruppe findet nämlich durch die Anordnung der Anzeigeeinrichtung am Lenkrad die Anzeige der Zustandsgröße im ständigen Blickfeld eines Fahrers statt, wodurch die Anzeige stets sehr gut sichtbar ist und die Aufmerksamkeit des Fahrers durch Betrachten der Anzeigeeinrichtung nicht wesentlich vom umgebenden Verkehrsgeschehen abgezogen wird. Dies führt insgesamt zu einer Verbesserung des Komforts und der Sicherheit eines Kraftfahrzeuges, wobei diese Vorteile bereits wesentlich durch eine Lenkradbaugruppe mit einem Lenkrad und einer am Lenkrad angeordneten Anzeigeeinrichtung, die mit einer an dem Kraftfahrzeug anzuordnenden Sensoreinrichtung zum Ermitteln einer Zustandsgröße eines Kraftfahrzeuges in Wirkverbindung steht und die zum Anzeigen der mittels der Sensoreinrichtung ermittelten Zustandsgröße vorgesehen ist, erzielt werden. Durch die mit der Sensoreinrichtung prinzipiell nicht zwingend gekoppelte Funktionseinheit werden zusätzliche Vorteile erzielt.

Die von der Sensoreinrichtung ermittelbare Zustandsgröße umfasst auch Grenzwerte der Zustandsgröße, die z.B. von außen vorgegeben werden, und die durch die Sensoreinrichtung ermittelbar sind.

Bei der Funktionseinheit kann es sich beispielsweise um einen Tempomat zum Regeln der Geschwindigkeit eines Kraftfahrzeuges auf einen Grenzwert der Geschwindigkeit (Tempolimit) handeln oder beispielsweise um eine Auswerteelektronik, die in Abhängigkeit von einer momentanen Drehzahl eines Motors und eines momentanen Ganges eines Getriebes des Kraftfahrzeuges einen zu verwendenden Gang ermittelt. Gleichfalls kann durch den Tempomat die Geschwindigkeit eines Kraftfahrzeuges an einen vorgebbaren Abstand (Sicherheitsabstand) zu einem vorausfahrenden Kraftfahrzeug angepasst werden. Ebenso kann es sich bei einer solchen Funktionseinheit um eine Steuerelektronik handeln, die zum automatischen Einparken eines Kraftfahrzeuges eingerichtet und vorgesehen ist.

Bevorzugt kann die Betätigungseinrichtung, die zum Betätigen (Aktivieren, Deaktivieren und Regeln) der Funktionseinheit dient, am Lenkrad angeordnet sein. Die Betätigungseinrichtung kann nun an der Speiche, dem Lenkradkranz sowie dem Nabenkörper angeordnet sein. Mit Vorteil ist die Betätigungseinrichtung derart am Lenkrad angeordnet, dass Sie von einem Fahrer betätigt werden kann, ohne dass dieser die Hände vom Lenkrad nehmen muss.

Vorzugsweise kann die Einstellung der Zustandsgröße eine Bestätigung oder eine Änderung der Zustandsgröße umfassen, die mittels der Betätigungseinrichtung vorgenommen werden kann, die zur Annahme und Ablehnung des Vorschlages durch Einwirken auf die Betätigungseinrichtung ausgebildet und vorgesehen ist. Wird also beispielsweise ein aktuell durch die Sensoreinrichtung ermittelter (beispielsweise von außen vorgegebener) Grenzwert der Geschwindigkeit vorgeschlagen, kann der Fahrer diesen mittels einer einmaligen Betätigung der Betätigungseinrichtung annehmen, ablehnen oder verstellen, d.h., den vorgeschlagenen Grenzwert der Geschwindigkeit hoch- bzw. heruntersetzen und ggf. sofort oder später annehmen.

Die Funktionseinheit kann einen vordefinierbaren Zeitraum vorsehen, innerhalb dessen die Betätigungseinrichtung zur wirksamen Annahme des Vorschlages betätigt werden muss.

Durch die vorstehenden Maßnahmen kann ein Fahrer ein Kraftfahrzeug komfortabel und sicher führen, wobei bei einer derartigen Gestaltung einer Schnittstelle Mensch/Maschine die Eigenverantwortung des Fahrers nicht beschnitten wird.

Beispielsweise ist die Funktionseinheit als ein Tempomat ausgebildet, der zum Begrenzen der momentanen Geschwindigkeit (Zustandsgröße) eines in einem Fahrzustand sich befindenden Kraftfahrzeuges auf einen Grenzwert der Geschwindigkeit (Tempolimit) dient. Der Tempomat regelt bevorzugt die Geschwindigkeit des Kraftfahrzeuges auf den mittels der Anzeigeeinrichtung angezeigten Grenzwert der Geschwindigkeit. D.h., der Tempomat bewirkt eine im Wesentlichen konstante Geschwindigkeit, die dem aktuellen (vorgeschriebenen) Tempolimit entsprechen kann.

Es kann vorgesehen sein, dass der Vorschlag den durch die Sensoreinrichtung ermittelten Grenzwert der Geschwindigkeit zur Annahme stellt, wobei die Annahme des Vorschlages die Begrenzung der Geschwindigkeit des Kraftfahrzeuges auf den Grenzwert der Geschwindigkeit durch den Tempomat bewirkt.

In einer Variante kann die Zustandsgröße ein Abstand zu einem vorausfahrenden Fahrzeug. Bevorzugt stellt der Vorschlag der Funktionseinheit (Tempomat) einen solchen Abstand zu einem vorausfahrenden Fahrzeug zur Annahme, wobei die Annahme des Vorschlages die Regelung der Geschwindigkeit des Kraftfahrzeuges durch den Tempomat derart bewirkt, dass der Abstand zum vorausfahrenden Fahrzeug im Wesentlichen konstant gehalten wird.

Zur Übernahme des durch die Anzeigeeinrichtung angezeigten Grenzwertes der Geschwindigkeit (Tempolimit) reicht insbesondere eine einmalige Betätigung der Betätigungseinrichtung. Diese kann beispielsweise als ein Druckschalter ausgebildet sein, der zur Aktivierung des Tempomats bzw. zur Bestätigung des mittels der Anzeigeeinrichtung angezeigten Grenzwertes der Geschwindigkeit einmalig gedrückt wird.

Auf diese Weise kann der Tempomat komfortabel aktiviert werden, wobei gleichzeitig auf Grund der Anzeige des Tempolimits im Sichtfeld eines Fahrers die Aufmerksamkeit des Fahrers nicht vom Verkehrsgeschehen abgezogen wird, was die Sicherheit des Kraftfahrzeuges insgesamt erhöht.

Es kann vorgesehen sein, dass die Funktionseinheit einen mittels der Betätigungseinrichtung aktivierbaren Toleranzbereich vorsieht, um den die Zustandsgröße einen Grenzwert der Zustandgröße unterschreiten und / oder überschreiten soll.

Die Sensoreinrichtung kann dazu vorgesehen und eingerichtet sein, einen (aktuellen) Grenzwert der Zustandsgröße von einer Anzeige in einer Umgebung eines Kraftfahrzeuges abzulesen. Weiterhin kann die Sensoreinrichtung dazu vorgesehen und eingerichtet sein, den Grenzwert der Zustandsgröße aus einer Datenbank, insbesondere eine GPS-Datenbank, auszulesen.

Bei einer Funktionseinheit in Form eines Tempomats, der als Zustandsgröße die Geschwindigkeit des Kraftfahrzeuges auf einen Grenzwert der Geschwindigkeit begrenzt bzw. regelt, kann der aktuell vorgegebene Grenzwert der Geschwindigkeit der Lenkradbaugruppe also beispielsweise mittels eines optischen Sensors (z.B. Digitalkamera) von einem Straßenschild oder einer sonstige Anzeige abgelesen werden. Die Sensoreinrichtung kann dazu vorgesehen und eingerichtet sein, den Grenzwert der Zustandsgröße (z.B. ein vorgeschriebenes Tempolimit) aus einem in einer Umgebung eines Kraftfahrzeuges angeordneten Informationsspeicher auszulesen. Weiterhin kann der Grenzwert der Zustandsgröße (z.B. ein vorgeschriebenes Tempolimit) mittels RFID (Radiofrequenzidentifizierung) an die Lenkradaugruppe übermittelt werden (z.B. über einen stationären Transponder in einer Umgebung des Kraftfahrzeuges als ein Speichermedium für einen am Ort des Transponders vorgegebenen Grenzwert der Geschwindigkeit, der durch eine am Kraftfahrzeug angeordnete Sensoreinrichtung ausgelesen werden kann).

Es kann eine Übertragungseinheit vorgesehen sein, die zum Übertragen von Ausgangssignalen der Sensoreinrichtung zur Anzeigeeinrichtung dient.

Es kann vorgesehen sein, dass als Zustandsgrößen eine momentane Drehzahl eines Motors und / oder ein Gang eines Getriebes eines Kraftfahrzeuges durch die Sensoreinrichtung ermittelt werden, wobei bevorzugt der durch die Funktionseinheit ermittelte Vorschlag einen zu verwendenden Gang betrifft, dessen Annahme durch einen Fahrer bei Kraftfahrzeugen mit einem Automatikgetriebe ein automatisches Einlegen des vorgeschlagenen Ganges bewirkt.

Die Funktionseinheit kann als eine mit der Anzeigeeinrichtung verbundene Auswertelektronik ausgebildet, die dazu eingerichtet und vorgesehen ist, den Vorschlag betreffend eines zu verwendenden Ganges zumindest in Abhängigkeit von der momentanen Drehzahl und dem momentanen Gang zu bestimmen und einem Fahrer über die Anzeigeeinrichtung anzuzeigen.

Die Sensoreinrichtung kann zur Erfassung weiterer Zustandsgrößen eines Kraftfahrzeuges ausgebildet sein, die bevorzugt mittels der Anzeigeeinrichtung anzeigbar sind, wobei diese Zustandsgrößen vorzugsweise Abstände zwischen einem Kraftfahrzeug und Objekten in einer Umgebung des Kraftfahrzeuges sind.

Bevorzugt kann die Sensoreinrichtung dazu vorgesehen und eingerichtet sein, die Abstände in eine Größe einer Abstellfläche umzusetzen. Hierbei kann die Sensoreinrichtung vorzugsweise dazu vorgesehen und eingerichtet sein, zu ermitteln, ob eine Abstellfläche in der Umgebung des Kraftfahrzeuges groß genug ist, um das Kraftfahrzeug auf dieser Abstellfläche zu parken. Weiterhin kann die Sensoreinrichtung bevorzugt dazu ausgebildet sein, über die Anzeigeeinrichtung Informationen über eine Abstellfläche anzuzeigen.

Die Funktionseinheit kann als eine mit der Sensoreinrichtung verbundene Steuerelektronik ausgebildet sein, die zum automatischen Einparken eines Kraftfahrzeuges eingerichtet und vorgesehen ist.

Die Anzeigeeinrichtung ist bevorzugt in einer Geradeausfahrtstellung des Lenkrades - bezogen auf einen in ein Kraftfahrzeug eingebauten Zustand des Lenkrades - entlang der vertikalen Fahrzeugachse oberhalb der Lenkachse angeordnet, und zwar insbesondere in 12 Uhr-Stellung. Die Anzeigeeinrichtung wird also mit Vorteil bevorzugt derart am Lenkradkranz positioniert, dass sie bei Geradeausfahrtstellung des Lenkradkranzes entlang der vertikalen Fahrzeugachse an einem höchsten Punkt des Lenkradkranzes angeordnet ist. Hierdurch kann die Anzeigeeinrichtung besonders leicht von einem Fahrer betrachtet werden, da der Fahrer zum Betrachten der Anzeigeeinrichtung seine Blickrichtung im Vergleich zur Geradeausblickrichtung (parallel zur Fahrzeuglängsachse) nur geringfügig ändern muss. Die Anzeigeeinrichtung befindet sich somit stets im Blickfeld des Fahrers, so dass einfache (deutliche) optische Signale stets wahrgenommen werden können, auch wenn die Anzeigeeinrichtung nicht durch den Fahrer fokussiert wird.

Es kann zumindest eine am Lenkrad angeordnete Erfassungseinrichtung zum Ermitteln eines Aufmerksamkeitszustandes eines Fahrers eines Kraftfahrzeuges vorgesehen sein, wobei die Erfassungseinrichtung zum Ansteuern der Anzeigeeinrichtung in Abhängigkeit von dem ermittelten Aufmerksamkeitszustand des Fahrers dient.

Der Aufmerksamkeitszustand eines Fahrers lässt sich anhand verschiedener Indikatoren messen, d.h., klassifizieren. Derartige Indikatoren sind z.B. die Blickrichtung des Fahrers, wobei insbesondere von Bedeutung ist, wie lange (zeitlich) die Blickrichtung von der Geradeausblickrichtung abweicht. Dies kann mit Hilfe einer Erfassungseinrichtung ermittelt werden.

Die Erfassungseinrichtung, beispielsweise zur Erfassung der Blickrichtung eines Fahrers, kann als eine Kamera (z.B. Digitalkamera) ausgebildet sein. Eine Auswertung eines von der Kamera erfassten Bildausschnitts kann mit Hilfe einer geeigneten Bilderkennungssoftware geschehen. Alternativ kann es sich bei der Erfassungseinrichtung auch um einen optischen Sensor handeln (beispielsweise eine Kombination aus einem Lichtsender und einem Lichtempfänger).

Vorzugsweise kann die Erfassungseinrichtung benachbart zur Anzeigeeinrichtung angeordnet sein. Dies ist vorteilhaft, da hierdurch die Wahrscheinlichkeit herabgesetzt wird, dass die Erfassungseinrichtung beim Führen des Kraftfahrzeuges durch die Hand eines Fahrers abgedeckt wird, da ein Fahrer in der Regel die Anzeigeeinrichtung, insbesondere eine optische Anzeige, nicht mit seinen Händen abdecken wird, um diese in ihrer Funktionalität nicht einzuschränken.

Es kann vorgesehen sein, dass die Erfassungseinrichtung am Lenkradkranz angeordnet ist.

Die Erfassungseinrichtung kann, beispielsweise in Form einer Kamera, in einer Geradeausfahrtstellung des Lenkrades entlang der vertikalen Fahrzeugachse oberhalb der Lenkachse angeordnet sein, insbesondere in 12 Uhr-Stellung.

Vorzugsweise weist die Anzeigeeinrichtung mehrere LED-Felder auf. Die Erfassungseinrichtung kann entlang des Lenkradkranzes, d.h., entlang einer Drehrichtung des Lenkradkranzes zwischen den zumindest zwei Anzeigenelementen angeordnet sein. Vorzugsweise kann hierbei der Abstand zwischen der Erfassungseinrichtung und jeweils einem der zumindest zwei Anzeigeelementen der Anzeigeeinrichtung entlang des Lenkradkranzes kleiner als die Breite zumindest eines der beiden Anzeigeelemente entlang des Lenkradkranzes (d.h., entlang der Drehrichtung des Lenkradkranzes). Die Erfassungseinrichtung weist also eine nur geringe Beabstandung zu zumindest einem der beiden Anzeigeelementen entlang der Drehrichtung auf.

Es kann eine Mehrzahl von Erfassungseinrichtungen vorgesehen sein, insbesondere in Form von Kameras (z.B. Digitalkameras), wobei bevorzugt die Erfassungseinrichtungen derart entlang des Lenkradkranzes angeordnet sein können, dass zumindest eine der Erfassungseinrichtungen unabhängig von einer Stellung des Lenkrades entlang der vertikalen Fahrzeugachse oberhalb der Lenkachse angeordnet ist.

Mit Vorteil kann die eine Erfassungseinrichtung und / oder die weiteren Erfassungseinrichtungen auch dazu verwendet werden, um andere Warn- bzw. Sicherheitseinrichtungen, wie beispielsweise eine Sitzrampe oder einen motorisierten Sicherheitsgurt, abhängig von einem Aufmerksamkeitszustand eines Fahrers zu steuern.

Weiterhin ist vorzugsweise ein am Nabenkörper angeordnetes Gassackmodul vorgesehen, mit einem Gassack, der zum Schutz eines Fahrers in einer entlang der Lenkachse verlaufenden Hauptentfaltungsrichtung entfaltbar ist und beim Entfalten quer zur Lenkachse gegen den Bereich des Lenkradkranzes stoßen kann, wobei der Bereich des Lenkradkranzes bevorzugt derart mit dem Gassack zusammenwirkt, dass dieser zum Schutz des Lenkradkranzes und des Gassackes und insbesondere der Anzeigeeinrichtung in Hauptentfaltungsrichtung abgelenkt wird.

Vorzugsweise weist der Bereich zum Ablenken eines sich entfaltenden Gassackes eine Ablenkschräge auf, d.h., er ist teilweise bezüglich einer Hauptentfaltungsrichtung des Gassackes, die mit der Lenkachse des Lenkrades zusammenfällt, geneigt. Die Neigung kann derart ausgebildet sein, dass der Gassack unter dem gleichen Winkel auf den Bereich auftrifft (Einfallswinkel) unter dem er auch abgelenkt wird (Ausfallswinkel). Beide Winkel werden hierbei in Bezug auf eine Normale gemessen, die senkrecht auf einem Auftreffbereich des Lenkradkranzes steht, auf den der Gassack beim Entfalten auftrifft.

Weiterhin kann der Bereich zum Ablenken des sich entfaltenden Gassackes vorzugsweise eine Oberfläche mit einem niedrigen Reibungskoeffizienten aufweisen, vorzugsweise ist dieser geringer als der Reibungskoeffizient angrenzender Bereiche des Lenkradkranzes. Wesentlich hierbei ist, dass die Oberfläche so gestaltet ist, dass die Reibung zwischen der Oberfläche und dem Gassack möglichst gering ist, der Gassack also leicht an dem Bereich abgleiten kann. In Abhängigkeit des Gassackmaterials kann die Oberfläche des Bereiches, an dem der Gassack abgleiten soll, beispielsweise besonders glatt ausgebildet sein.

Die vorstehend beschriebene Formgebung des zum Ablenken des Gassackes dienenden Bereiches des Lenkradkranzes (bzw. die Beschaffenheit der Oberfläche dieses Bereiches) schützt nicht nur den Lenkradkranz und die Anzeigeeinrichtung vor einem sich entfaltenden Gassack, sondern auch den Gassack selbst, was die Sicherheit eines Kraftfahrzeuges weiter verbessert.

Vorzugsweise sind die LEDs eines LED-Feldes derart ansteuerbar, dass (entsprechend der Anzahl der LEDs) grafische Symbole dargestellt werden können. Ein derartiges LED-Feld kann auch zeilenförmig ausgebildet sein.

Bei dem Bildschirm handelt es sich vorzugsweise um ein LCD (Flüssigkristallanzeige). Es können aber auch andere Darstellungstechniken verwendet werden.

Weitere Einzelheiten und Vorteile der Erfindung werden bei der nachfolgenden Beschreibung von Ausführungsbeispielen anhand der Figuren deutlich werden.

Es zeigen:
- Figur 1: eine perspektivische Darstellung der Blickrichtungen eines Fahrers bei bekannten Kommunikationsinterfaces und bei einer Variante einer erfindungsgemäßen Lenkradbaugruppe, mit einer in einem Lenkradkranz angeordneten Anzeigeeinrichtung,
- Figur 2: eine Draufsicht auf eine erfindungsgemäße Lenkradbaugruppe der in der Figur 1 gezeigten Art, mit einem LCD (Anzeigeeinrichtung) im Lenkradkranz,
- Figur 3a-3d: eine Anzeigeeinrichtung (LCD) der in der Figur 2 gezeigten Art, die optische Signale zur Warnung vor einem zu geringem Abstand eines vorausfahrenden Fahrzeuges anzeigt,
- Figur 4a-4c: schematische Darstellungen von möglichen Kollisionen mit einem entgegenkommenden Fahrzeug auf einer benachbarten Spur, mit einem Fahrzeug auf einer kreuzenden Spur und mit einem vorausfahrenden Fahrzeug auf der gleichen Fahrspur,

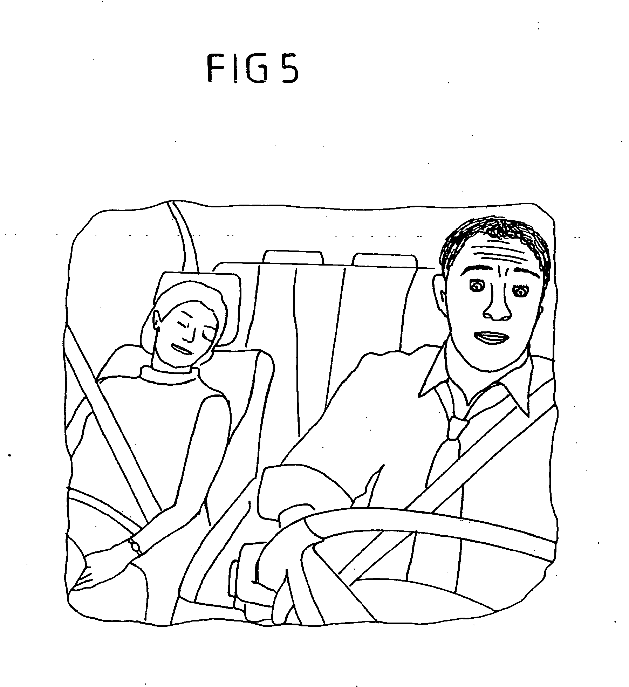

- Figur 5: perspektivische Darstellung eines Fahrers im Cockpit eines Kraftfahrzeuges, wobei die Aufmerksamkeit des Fahrers durch die erfindungsgemäße Lenkradbaugruppe auf die Straße (Geradeausblickrichtung) gelenkt worden ist,
- Figur 6: einen Ausschnitt einer Anzeigeeinrichtung, die ein optischen Signal für eine Kurvengeschwindigkeitswarnung anzeigt,
- Figur 7: einen Ausschnitt einer Anzeigeeinrichtung, die ein optisches Warnsignal zur Warnung vor einem Überfahren eines Stoppschildes anzeigt,
- Figur 8: eine Abwandlung einer Lenkradbaugruppe, die nicht nach der Erfindung ausgeführt ist,
- Figur 9: eine Abwandlung einer Lenkradbaugruppe, die nicht nach der Erfindung ausgeführt ist,
- Figur 10: eine schematische Schnittdarstellung eines Lenkrades einer erfindungsgemäßen Lenkradbaugruppe, mit einem Bereich zum Ablenken eines sich entfaltenden Gassackes,
- Figur 11: eine schematische Schnittdarstellung eines Lenkradkranzes des in der Figur 10 gezeigten Lenkrades, und
- Figur 12: eine schematische Schnittdarstellung einer Abwandlung des in der Figur 11 gezeigten Lenkradkranzes.

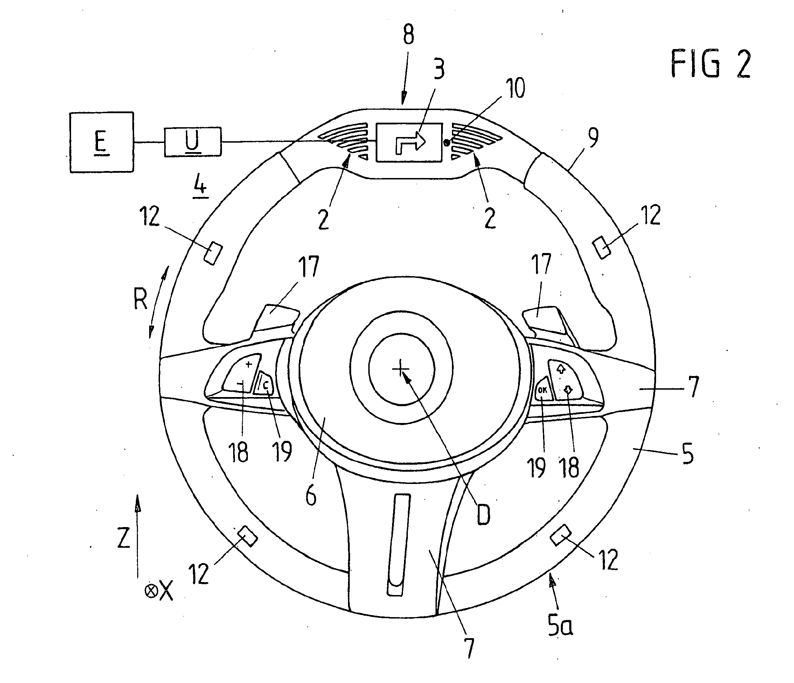

Figur 2 zeigt eine Draufsicht auf eine Lenkradbaugruppe 4 mit einem Lenkrad 5a, das einen Lenkradkranz 5 und einen Nabenkörper 6 aufweist, der über drei Speichen 7 mit dem Lenkradkranz 5 verbunden ist.

Der Nabenkörper 6 ist um eine Lenkachse D drehbar gelagert, die senkrecht auf der Papierebene steht und wird von dem ringförmig ausgebildeten Lenkradkranz 5 quer zur Lenkachse D entlang einer Drehrichtung R des Lenkradkranzes 5 umlaufen. Die drei Speichen 7 sind im Wesentlichen T-förmig angeordnet, wobei - bezogen auf einen Einbauzustand des Lenkrades 5a - in einer Geradeausfahrtstellung des Lenkradkranzes 5 eine der drei Speichen 7 im Wesentlichen entlang der vertikalen Fahrzeugachse z verläuft (das Lenkrad 5a kann zur vertikalen Fahrzeugachse z geneigt sein, bzw. eine verstellbare Neigung aufweisen), während die beiden anderen Speichen 7 horizontal in entgegen gesetzter Richtung vom Nabenkörper 6 abstehen und den Lenkradkranz 5, bezogen auf seine Geradeausfahrtstellung, in eine oberhalb der Lenkachse D verlaufende Hälfte und eine unterhalb der Lenkachse D verlaufende Hälfte unterteilen.

Die Lenkradbaugruppe 4 weist eine Anzeigeeinrichtung 8 in Form einer optischen Anzeige zum Anzeigen von Fahrinformationen auf. Eine erstes Anzeigeelement der Anzeigeeinrichtung 8 ist als ein rechteckförmiger Bildschirm 3 ausgebildet, und zwar als ein LCD (Flüssigkristallanzeige), der in der Figur 2 gezeigten Geradeausfahrtstellung des Lenkradkranzes 5 in der oberen Hälfte des Lenkradkranzes 5 angeordnet ist, und zwar im Wesentlichen derart, dass er bezogen auf die Geradeausfahrtstellung des Lenkradkranzes am höchsten Punkt (bezogen auf die vertikale Fahrzeugachse z) des Lenkradkranzes 5 angeordnet ist, d.h., in 12 Uhr-Stellung. Hierbei ist der Bildschirm 3 in eine einem Fahrer zugewandte Oberseite des Lenkradkranzes 5 eingelassen, so dass er dem Fahrer entlang der Fahrzeuglängsachse x gegenüberliegt und diesem zugewandt ist.

Der Bildschirm 3 ist entlang des Lenkradkranzes 5, d.h., entlang der Drehrichtung R des Lenkradkranzes 5, zwischen zwei weiteren Anzeigeelemente der Anzeigeeinrichtung 8 angeordnet, die jeweils aus fünf LED-Feldern 2 gebildet sind. Die LED-Felder 2 sind entlang der Drehrichtung R längs erstreckt (zeilenförmig) ausgebildet, wobei in der Geradeausfahrtstellung des Lenkradkranzes 5 die jeweils fünf LED-Felder 2 entlang der vertikalen Fahrzeugachse z übereinander angeordnet sind und zu einem äußeren umlaufenden Rand 9 des Lenkradkranzes 5 hin (entlang der Drehrichtung R) breiter werden, d.h., die Längserstreckung der LED-Felder 2 entlang der Drehrichtung R wächst mit zunehmenden radialen Abstand zum Nabenkörper 6 des Lenkrades 5a.

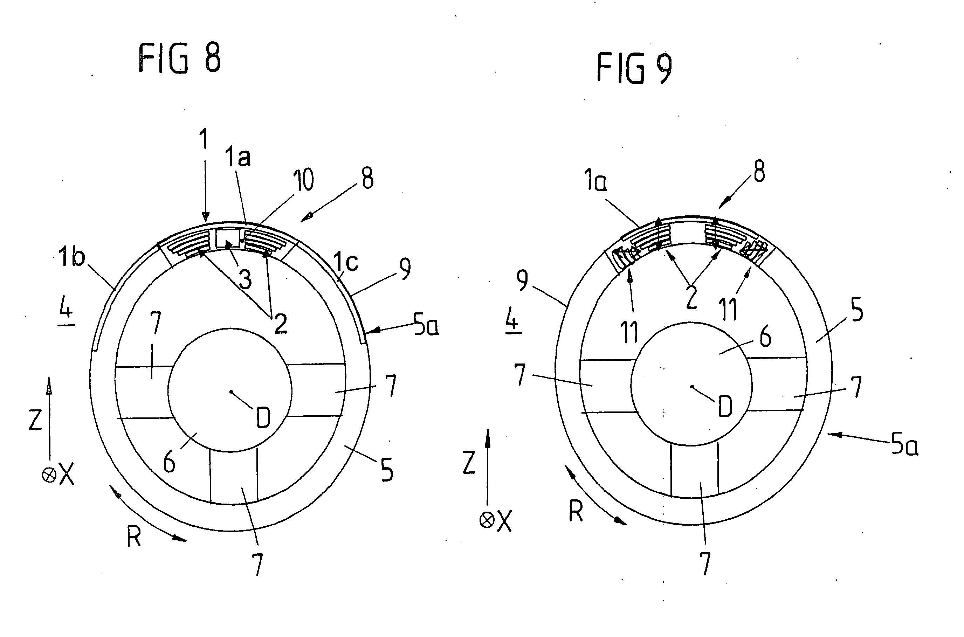

Figur 8 zeigt eine Draufsicht einer Abwandlung des in der Figur 2 gezeigten Lenkrades 5 bei dem sich im Unterschied zur Figur 2 ein weiteres bogenförmig ausgebildetes LED-Feld 1 entlang eines äußersten (entlang einer senkrecht auf der Drehachse D stehenden radialen Richtung) umlaufenden Randes 9 des Lenkradkranzes 5 erstreckt, und zwar im Wesentlichen über die gesamte obere Hälfte des Lenkradkranzes 5. Das LED-Feld 1 ist entlang der Drehrichtung R in drei etwa gleich lange Segmente 1b, 1 a und 1 c unterteilt, wobei das mittlere Segment 1a entlang der vertikalen Fahrzeugachse z (bei Geradausfahrtstellung des Lenkradkranzes 5) oberhalb des Bildschirmes 3 und der LED-Felder 2 (jeweils vier zu beiden Seiten des Bildschirmes 3 entlang der Drehrichtung R) angeordnet ist. Jedes dieser Segmente 1a, 1b und 1c ist zur Anzeige von Fahrinformationen separat ansteuerbar.

Figur 9 zeigt eine weitere Abwandlung der in der Figur 8 gezeigten Lenkradbaugruppe 4, bei der im Unterschied zur Figur 8 kein Bildschirm 3 vorgesehen ist (dieser kann natürlich auch hier verwendet werden) und das weitere LED-Feld 1 lediglich über das mittlere Segment 1 a verfügt. Weiterhin ist keine Kamera 10 vorgesehen, kann aber auch hier eingesetzt werden. Zusätzlich sind an einander abgewandten Seiten der LED-Felder 2 jeweils vier zusätzliche LED-Felder 11 angeordnet, die quer zur Drehrichtung R auf der Oberseite des Lenkradkranzes 5 angeordnet sind. Diese zusätzlichen LED-Felder 11 können separat angesteuert werden und dienen insbesondere zum Anzeigen von Warnsignalen, die auf ein Verlassen der Fahrspur (quer zur Fahrtrichtung) hinweisen. Wird beispielsweise die Fahrspur über die rechte Markierung (in Fahrtrichtung) der Fahrspur verlassen, wird dies durch einen Sensor festgestellt und an eine Steuerelektronik übermittelt, die entsprechend eines der zusätzlichen LED-Felder 11 auf der rechten Seite (bezogen auf die Fahrtrichtung) des Lenkradkranzes 5 aktiviert. Je nachdem, wie weit das Fahrzeug die Spur verlässt, können weitere zusätzliche LED-Felder 11 auf der rechten Seite des Lenkradkranzes 5 aktiviert werden.

Ein Fahrer gilt als aufmerksam oder als in einem Aufmerksamkeitszustand befindlich, wenn er den umgebenden Verkehr und die Umgebung beobachtet. Zum Erfassen eines Aufmerksamkeitszustandes des Fahrers ist gemäß Figur 2 bzw. Figur 8 eine Erfassungseinrichtung 10 in Form einer Kamera entlang der Drehrichtung R zwischen dem Bildschirm 3 und den übereinander angeordneten LED-Feldern 2 angeordnet, die ihrerseits bezogen auf die Geradeausfahrtrichtung (aus Sicht eines Fahrers) auf der rechten Seite des Bildschirmes 3 angeordnet sind.

Ein wichtiger Indikator für den Aufmerksamkeitszustand des Fahrers sind z.B. seine Blickrichtung und seine Augenstellung. Der Aufmerksamkeitszustand kann hierbei beispielsweise anhand der Abweichung der Blickrichtung von der Geradeausblickrichtung (Beobachtung der vorausfahrenden Verkehrsteilnehmer) und / oder der Augenstellung (offen, geschlossen) klassifiziert werden. Sowohl die Blickrichtung als auch die Augenstellung können durch die Kamera 10 erfasst werden und daher zur Steuerung der vorstehend beschriebenen Anzeigeelemente der Anzeigeeinrichtung 8 verwendet werden.

Hierbei ist vorgesehen, dass die Anzeigeelemente der Anzeigeeinrichtung 8 zur Warnung eines Fahrers vor seiner mangelnden Aufmerksamkeit (z.B. wenn die Augen des Fahrers länger als eine vordefinierbare Zeitspanne geschlossen sind und / oder die Blickrichtung des Fahrers länger als eine bestimmte Zeitspanne von einer Geradeausblickrichtung abweicht) aktiviert werden.

Zur Steigerung der visuellen Wahrnehmbarkeit mittels der Anzeigeelemente erzeugter Warnsignale ist insbesondere vorgesehen, dass die LED-Felder 2 oder das weitere LED-Feld 1 zum Aufleuchten in verschiedenen Frequenzen und / oder Intensitäten, d.h., Helligkeitsstufen vorgesehen und eingerichtet sind. Alternativ oder zusätzlich können zur Warnung des Fahrers mittels des Bildschirmes 3 Texte und / oder Symbole angezeigt werden.

Weiterhin können zum Warnen des Fahrers haptische Signale dienen, die gemäß Figur 2 mittels im Lenkradkranz 5 angeordneter Vibratoren 12 erzeugbar sind. Damit die mittels der Vibratoren 12 erzeugten haptischen Signale in jeder erdenklichen Griffposition für einen Fahrer spürbar sind, sind sie entlang der Drehrichtung R am Lenkradkranz 5 verteilt angeordnet oder erstrecken sich alternativ längs der Drehrichtung R über einen gesamten Umfang des Lenkradkranzes 5. Derartige Vibratoren 12 können auch in einem dem Fahrer zugeordneten Sitz eines Kraftfahrzeuges verwendet werden. Ein Einsatz haptischer Anzeigen in Form im Lenkradkranz 5 angeordneter Vibratoren 12 ist insbesondere zum Warnen eines Fahrers vor dem seitlichen Verlassen einer Fahrspur vorgesehen. Weiterhin können zum Warnen des Fahrers natürlich auch akustische Signale dienen.

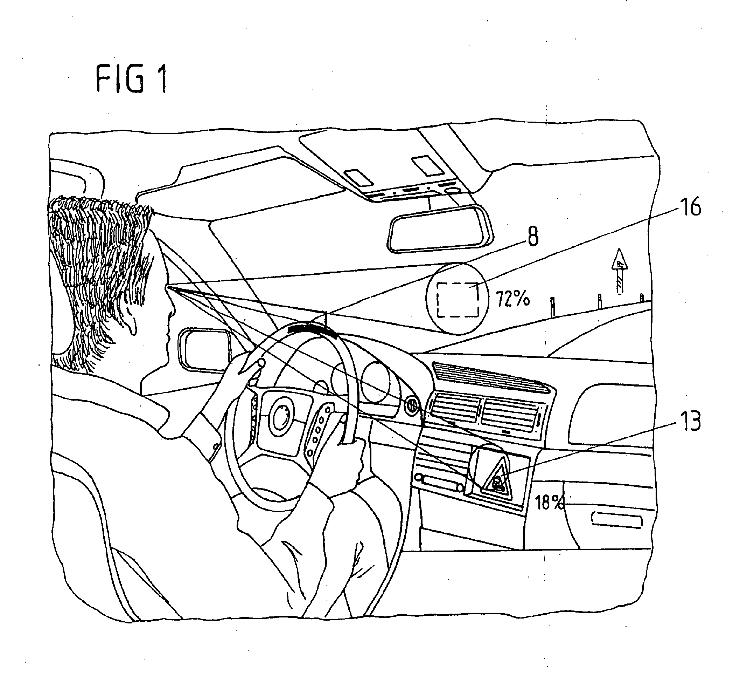

Die Anzeigeeinrichtung 8 der Lenkradbaugruppe 4 ist auf Grund ihrer Anordnung am Lenkradkranz 5 stets im Gesichtsfeld eines Fahrers präsent. Es ist bekannt, dass bei Verwendung eines herkömmlichen Navigationssystems mit einem bekannten, an der Mittelkonsole unterhalb des Armaturenbrettes angeordneten Kommunikationsinterface 13 gemäß Figur 1, lediglich etwa 18% der Fahrzeit das Kommunikationsinterface 13 (Kombination aus optischer Anzeige und Bedieneinheit) betrachtet wird, während ein durchschnittlicher Fahrer etwa 72% der Fahrtzeit in die Geradeausfahrtrichtung blickt (Geradeausblickrichtung), so dass die Anzeigeeinrichtung 8 der Lenkradbaugruppe 4 rund 72% der Fahrzeit im Gesichtsfeld eines Fahrers liegt. Hierdurch lässt sich ein Fahrer in gefährlichen Situationen besser über die Anzeigeeinrichtung 8 warnen und informieren, wobei gleichzeitig die Aufmerksamkeit weniger vom umgebenden Verkehrsgeschehen abgezogen wird, da die Anzeigeeinrichtung 8 zentraler im Gesichtfeld gelagert ist als ein bekanntes zentrales Kommunikationsinterface 13. Im Ergebnis können Unfälle durch rechtzeitiges Warnen eines Fahrers vermieden bzw. effektiver vermindert werden.

Weiterhin weist die Anzeigeeinrichtung 8 der Lenkradbaugruppe 4 gegenüber einem bekannten HUD 16 (head up display, d.h., auf die Frontscheibe eines Kraftfahrzeuges projizierte Anzeige) gemäß Figur 1 den Vorteil auf, dass sie weniger stark durch Umwelteinflüsse (z.B. direkte Sonneneinstrahlung entgegen der Geradeausfahrtrichtung) beeinträchtigt wird.

Weiterhin weist die Lenkradbaugruppe 4 gemäß Figur 2 Betätigungseinrichtungen auf, die in den Figuren 8 und 9 nicht gezeigt sind. Hierbei handelt es sich um zwei Betätigungshebel 17, die jeweils an den horizontal verlaufenden Speichen 7 der Lenkradbaugruppe 4 derart ausgebildet und angeordnet sind, dass sie durch einen Fahrer, z.B. per Daumendruck, entlang der Fahrzeuglängsachse x betätigbar sind. Mittels dieser Betätigungshebel 17 kann beispielsweise ein Fahrtrichtungsanzeiger eines Kraftfahrzeuges aktiviert bzw. deaktiviert werden. Weiterhin weist jede der beiden horizontal verlaufenden Speichen 7 (horizontal bezogen auf die Geradeausfahrtstellung des Lenkradkranzes 5) jeweils ein wippenartiges Betätigungselement 18 auf, dass an zwei einander gegenüberliegenden Enden betätigbar ist, und zwar durch ein Drücken entlang der Fahrzeuglängsachse x. Hiermit kann in einem auf dem Bildschirm 3 angezeigten Menü eine Auswahl getroffen werden, indem beispielsweise ein Auswahlbereich (cursor) mit einem der beiden Betätigungselemente 18 nach oben bzw. nach unten (entlang der vertikalen Fahrzeugachse z bei Geradeausfahrtstellung des Lenkradkranzes 5) bewegbar wird (scrollen), während mit dem jeweils anderen Betätigungselement 18 eine Bewegung des Auswahlfeldes nach links bzw. rechts erfolgen kann (von einem Fahrer aus gesehen bei Geradeausfahrtstellung des Lenkradkranzes 5).

Weiterhin befindet sich auf jeder der beiden horizontalen Speichen 7 ein einfacher Druckschalter 19, wobei der eine der beiden Druckschalter 19 vorzugsweise dazu verwendet wird, einen bestimmte Auswahl zu bestätigen, während der andere dazu dient, eine durch die Anzeigeeinrichtung 8 angezeigte Auswahl oder Option abzulehnen.

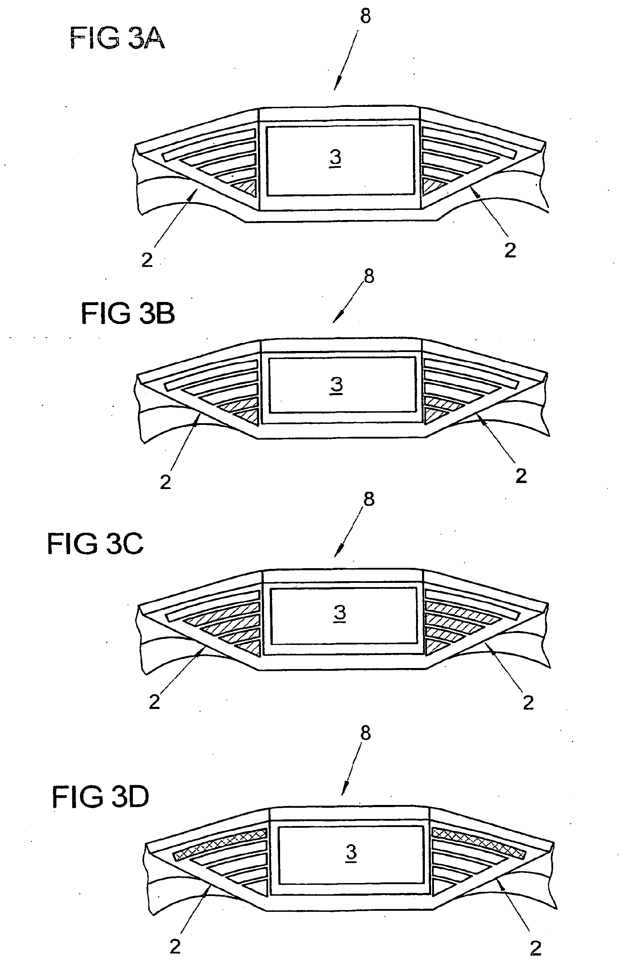

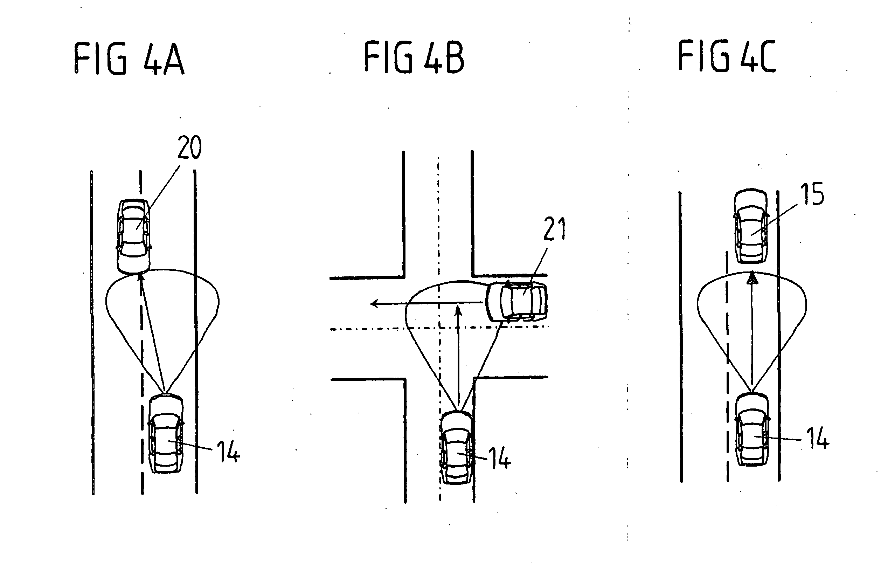

Die vertikal übereinander angeordneten LED-Felder 2 der Anzeigeeinrichtung 8 gemäß den Figuren 2, 8 und 9 der Lenkradbaugruppe 4 werden vorzugsweise für Kollisionswarnungen bzw. Abstandssignale verwendet. Hierbei werden zumindest drei Fälle voneinander unterschieden. Zunächst kann bei einem vorausfahrenden Fahrzeug 15 auf derselben Fahrspur gemäß der Figur 4c der Abstand zu diesem Fahrzeug 15 mittels der LED-Felder 2 gemäß Figur 3a bis 3d angezeigt werden, wobei beim Unterschreiten eines bestimmten Abstandes zunächst die näher zum Nabenkörper 6 gelegenen LED-Felder 2 zu beiden Seiten des Bildschirms 3 aktiviert werden (Figur 3a) und dann sukzessive beim Unterschreiten weiterer (jeweils kleinerer) Abstände die entlang der vertikalen Fahrzeugachse z - bezogen auf eine Geradeausfahrtstellung des Lenkrades - darüber angeordneten LED-Felder 2 (Figur 3b bis 3c). Bei akuter Kollisionsgefahr werden die - bezogen auf eine Geradeausfahrtstellung des Lenkradkranzes 5 - entlang der vertikalen Fahrzeugachse z obersten LED-Felder 2 (Figur 3d) bzw. bei einem Lenkrad 5 der in der Figur 8 oder 9 gezeigten Art bevorzugt das weitere LED-Feld 1am äußeren umlaufen Rand 9 des Lenkradkranzes 5 aktiviert. Vorzugsweise ist das oberste LED-Feld 2 bzw. das weitere LED-Feld 1 dazu ausgebildet, zur vorstehend beschriebenen Warnung eines Fahrers ein rotes Licht auszusenden.

Eine derartige Kollisionswarnung wird auch bei einem entgegenkommenden Fahrzeug 20 angezeigt, das gemäß der Figur 4a von einer benachbarten Spur auf diejenige Fahrspur wechselt, die das Kraftfahrzeug 14 mit der Lenkradbaugruppe 4 befährt. Weiterhin werden solche Warnsignale, auch bei einer drohenden Seitenkollision mit einem die Fahrspur des Kraftfahrzeuges 14 kreuzenden Fahrzeug 21 gemäß der Figur 4b aktiviert.

Über den Bildschirm 3 können auch Kurvengeschwindigkeitswarnungen angezeigt werden. Hierbei bestimmt eine Sensorik die Krümmung einer vorausliegenden Kurve und errechnet daraus eine Maximalgeschwindigkeit, mit der die Kurve noch gefahrlos durchfahren werden kann. Liegt die Geschwindigkeit des Kraftfahrzeuges darüber, wird die Kurvengeschwindigkeitswarnung, beispielsweise in Form eines Piktogramms gemäß Figur 9, aktiviert.

Weiterhin können über den Bildschirm 3 der Lenkradbaugruppe 4 durch ein Navigationssystem ermittelte Informationen, z.B. eine Fahrtroute, dargestellt werden. Insbesondere vor einem Abbiegen kann über den Bildschirm 3, z.B. durch Anzeigen eines in die künftige Fahrtrichtung weisenden Pfeiles gemäß Figur 2, eine Fahrtrichtungsänderung angezeigt werden.

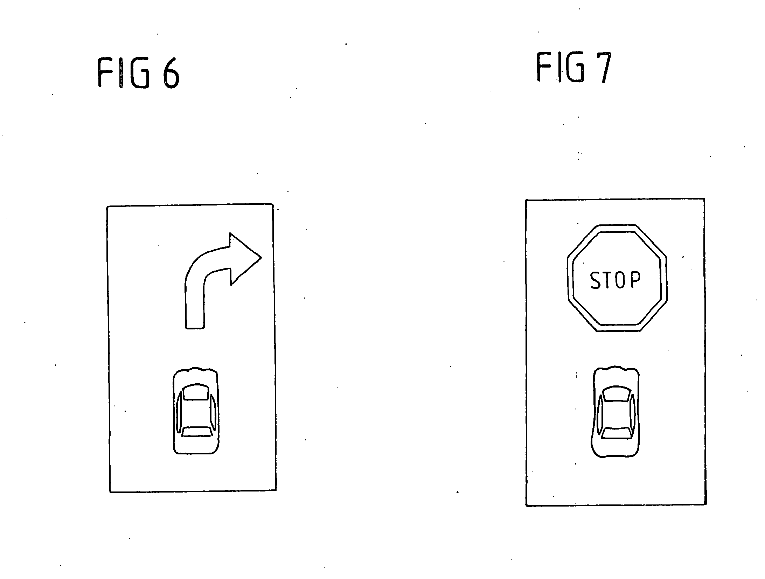

Weiterhin ist vorgesehen, dass eine Sensorik, beispielsweise eine Kamera, Stoppschilder in einer Kraftfahrzeugsumgebung erkennt. Diese werden auf dem Bildschirm 3 als ein Piktogramm gemäß Figur 7 angezeigt, wobei gegebenenfalls eine Bremswarnung, beispielsweise über das weitere LED-Feld 1 oder eines der LED-Felder 2 angezeigt wird. Vorzugsweise ist das weitere LED-Feld 1 bzw. eines der LED-Felder 2 dazu ausgebildet zu diesem Zweck ein rotes Licht auszusenden.

Die Anzeigeeinrichtung 8, insbesondere der Bildschirm 3, können natürlich auch dazu dienen, einen Reifendruck eines Kraftfahrzeuges sowie den Benzinstand eines Tanks eines Kraftfahrzeuges anzuzeigen und / oder bei einem mangelndem Reifendruck bzw. einem Benzinmangel eine entsprechende Warnung bzw. einen Hinweis anzuzeigen. Mit Vorteil kann ein Fahrer über den Bildschirm 3 auch daran erinnert werden sich anzuschnallen.

Besonders vorteilhaft kann gemäß Figur 2 und Figur 8 über den Bildschirm 3 ein z.B. durch eine Übertragungseinheit U (in der Figur 8 nicht gezeigt) an die Lenkradbaugruppe 4 übertragener Grenzwert der Geschwindigkeit eines Kraftfahrzeuges (Tempolimit) dargestellt werden, der mittels einer dafür vorgesehenen Sensoreinrichtung E ermittelbar ist, die im oder am Kraftfahrzeug angeordnet ist. Die Sensoreinrichtung E kann hierbei den Grenzwert der Geschwindigkeit mittels optischer Sensoren von entlang einer Fahrtroute angeordneten Hinweisschildern ablesen. Alternativ oder zusätzlich ist die Sensoreinrichtung E dazu ausgebildet, den aktuellen Grenzwert der Geschwindigkeit aus einer GPS-Datenbank, in der derartige Informationen gespeichert sind, auslesen.

Ein aktuell durch die Sensoreinrichtung E ermittelter Grenzwert der Geschwindigkeit wird einem Fahrer zunächst über den Bildschirm 3 angezeigt. Der Fahrer kann sich nun entscheiden, ob er den vorgeschlagenen Grenzwert der Geschwindigkeit annimmt und somit an einen Tempomat übergibt, der in der Folge die Geschwindigkeit des Fahrzeuges auf den angenommen Grenzwert der Geschwindigkeit begrenzt bzw. regelt oder ob er den aktuell ermittelten Grenzwert der Geschwindigkeit ablehnt.

Zur Annahme bzw. zum Ablehnen des Vorschlages dient die mit dem Tempomat und der Anzeigeeinrichtung gekoppelte Betätigungseinrichtung 17, 18, 19 der Lenkradbaugruppe 4, wobei bevorzugt durch einmaliges Betätigen der Betätigungseinrichtung 17, 18, 19, beispielsweise durch Drücken eines der beiden Druckschalter 19, der ermittelte Grenzwert der Geschwindigkeit angenommen wird.

Der Fahrer hat auch die Möglichkeit, den ihm über den Bildschirm vorgeschlagenen Grenzwert der Geschwindigkeit mittels der Betätigungseinrichtung zu verändern, d.h., zu erhöhen oder herabzusetzen. Hierzu können beispielsweise die Betätigungshebel 17 und / oder die Betätigungselemente 18 eingerichtet und vorgesehen sein.

Weiterhin kann mittels der Betätigungseinrichtung 17, 18, 19 ein vom Tempomat vorgesehener Toleranzbereich des Grenzwertes der Geschwindigkeit betragsmäßig eingestellt und aktiviert werden. Der Toleranzbereich ist derjenige Geschwindigkeitsbereich, um den die Geschwindigkeit des Kraftfahrzeuges von dem ermittelten Grenzwert der Geschwindigkeit abweichen soll. So kann der Fahrer z.B. einstellen, dass der von außen an die Anzeigeeinrichtung übermittelte Grenzwert der Geschwindigkeit immer um 10% überschritten werden soll.

Weiterhin ist der Bildschirm 3 zur Anzeige der momentanen Umdrehungszahl des Motors und / oder des verwendeten Ganges des Getriebes eines Kraftfahrzeuges ausgebildet. Bei diesem Ausführungsbeispiel ist die Sensoreinrichtung E dazu eingerichtet und vorgesehen die momentane Umdrehungszahl und den aktuellen Gang des Kraftfahrzeuges zu ermitteln.

Eine Funktionseinheit in Form einer Auswerteelektronik errechnet aus der ermittelten Drehzahl in Abhängigkeit des momentanen Ganges einen Vorschlag für einen zu verwendenden Gang, der über den Bildschirm 3 angezeigt und beispielsweise per Knopfdruck (Druckschalter 19) durch einen Fahrer angenommen bzw. abgelehnt werden kann. Der Vorschlag kann von weiteren Parametern abhängen, die über die Betätigungseinrichtung 17,18,19 der Lenkradbaugruppe 4 einstellbar sein können (z.B. gewünschter Fahrstil wie sportlich, sparsam etc.)

Weiterhin kann der Bildschirm 3 auch vorteilhaft dazu verwendet werden, einem Fahrer anzuzeigen, mit welchem Manöver er in eine ausgewählte Parklücke (Abstellfläche) einparken kann. Diese wird hierzu, beispielsweise im Vorbeifahren, von der Sensoreinrichtung E vermessen und klassifiziert, d.h., es wird automatisch festgestellt, ob ein Einparken von der Größe der Abstellfläche her möglich ist.

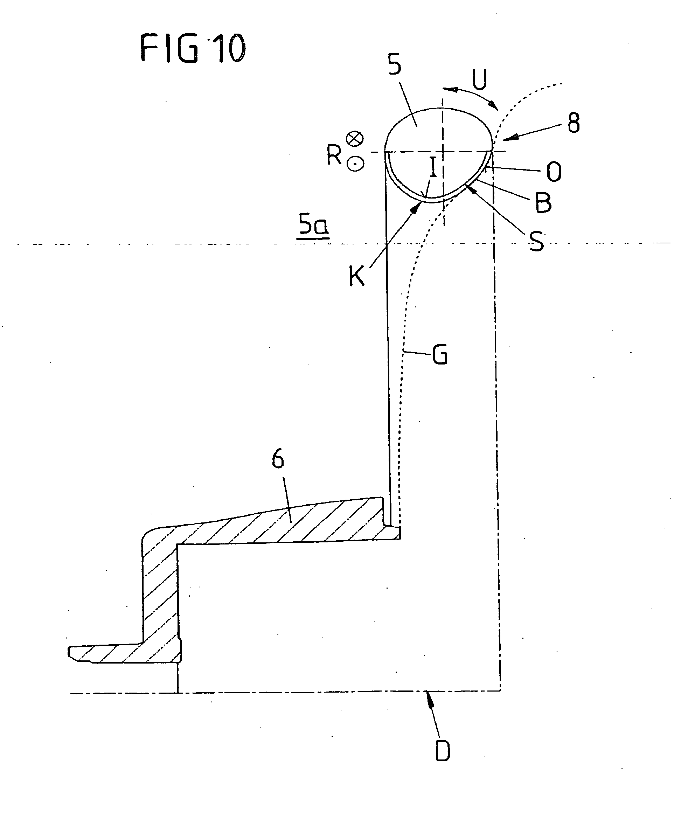

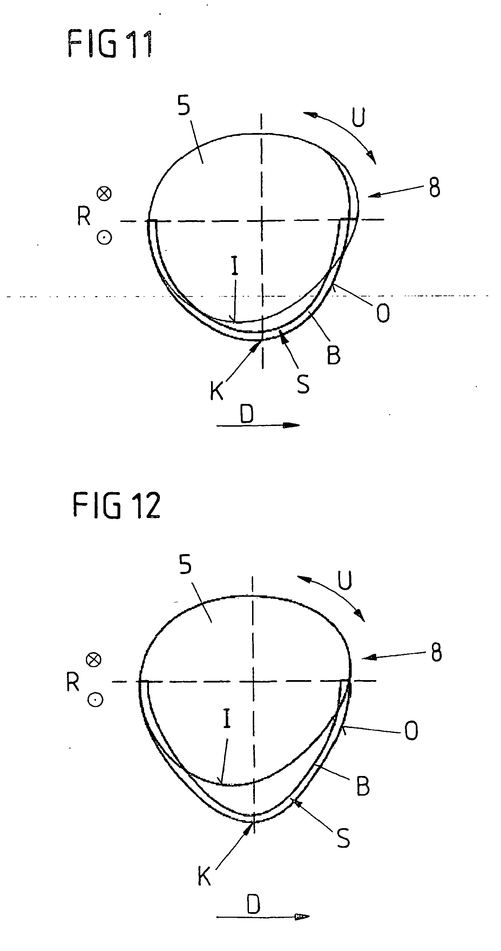

Figur 10 zeigt im Zusammenhang mit Figur 11 und Figur 12 eine ausschnitthafte schematische Schnittdarstellung eines Lenkrades 5a einer Lenkradbaugruppe 4 der in den Figuren 2, 8 und 9 gezeigten Art, mit einem Lenkradkranz 5 des Lenkrades 5a, der den Nabenkörper 6 quer zur Lenkachse D ringförmig umläuft. Die Lenkachse D liegt jeweils in der Schnittebene der Figuren 10 bis 12.

Der Nabenkörper 6 bildet eine Aufnahme für ein Gassackmodul, das einen Gassack G aufweist (ein Teil des Gassackes G ist durch eine gestrichelte Linie in der Figur 10 angedeutet), der in einer mit der Lenkachse D zusammenfallenden Hauptentfaltungsrichtung zum Schutz eines Fahrers entfaltbar ist. Hierzu wird der Gassack G mittels eines nicht gezeigten Gasgenerators des Gassackmoduls aufgeblasen, wobei der Gassack G eine nicht gezeigte Abdeckkappe des Nabenkörpers 6 durchstößt bzw. absprengt und sich entlang der Hauptentfaltungsrichtung zum Schutz eines Fahrers, d.h., zwischen dem Lenkrad 5a und dem Fahrer, entfaltet. Der Gassack G kann im aufgeblasenen Zustand symmetrisch zur Lenkachse D bzw. zur Hauptentfaltungsrichtung ausgebildet sein und weist dabei sowohl eine räumliche Ausdehnung entlang der Lenkachse D als auch quer zur Lenkachse D auf. Durch ein Befüllen mit durch den Gasgenerator bereitgestelltem Gas wird der Gassack G zur Entfaltung gebracht, wobei er sich quer zur Lenkachse D ausdehnt und gegen einen Bereich B des Lenkradkranzes 5 stoßen kann, der der Lenkachse D quer zur Lenkradachse D gegenüberliegt. Dies kann beispielsweise geschehen, wenn sich der Gassack G nicht frei entfalten kann, also z.B. in Situationen, in denen sich der Fahrer entlang der Lenkachse D zu dicht vor dem Lenkrad 5 befindet (oop-Situation).

Um eine Um- bzw. Ablenkung eines auf den Bereich B auftreffenden Gassackes G sicherzustellen, und zwar derart, dass der Gassack G den Lenkradkranz 5, insbesondere die am Lenkradkranz 5 bzw. dem Bereich B angeordnete Anzeigeeinrichtung 8, nicht beschädigt, weist der Bereich B eine Ablenkschräge auf, d.h., er ist bezüglich der Lenkachse D geneigt. Diese Neigung ist derart ausgebildet, dass der Gassack G unter einem Einfallswinkel auf den Bereich B auftrifft, der einem Ausfallswinkel, unter dem er durch den Bereich B abgelenkt wird, betragsmäßig im Wesentlichen gleicht. Damit dies über einen möglichst großen Bereich entlang einer den Lenkradkranz 5 quer zur Drehrichtung R ringförmig umlaufenden Umfangsrichtung U möglich ist, weist der Bereich B zusätzlich eine konvexe Krümmung auf.

Zusätzlich weist der Bereich B eine dem Nabenkörper 6 und gegebenenfalls einem Fahrer zugewandte Oberfläche O auf, die derart beschaffen ist, dass der Gassack G leicht an ihr abgleiten kann (geringe Reibung). Weiterhin kann der Bereich B auf eine Umgebung der Anzeigeeinrichtung 8 beschränkt sein und sich in Drehrichtung R und / oder in Umfangsrichtung U entlang der Anzeigeeinrichtung 8 erstrecken. Er kann aber auch den Lenkradkranz 5 bzw. die Lenkachse D entlang der Drehrichtung R ringförmig umlaufen.

Der wie vorstehend beschrieben ausgeformte Bereich B des Lenkradkranzes 5 kann an einem oder mehreren Schalenelementen S ausgebildet sein, die an einer dem Nabenkörper 6 zugewandten Innenseite 1 des Lenkradkranzes 5 angeordnet sind.

In einer Schnittebene, in der die Lenkachse D liegt, weisen diese Schalenelemente S eine Kontur auf, die im Bereich der Anzeigeeinrichtung 8 von den Konturen zur Anzeigeeinrichtung 8 entlang der Drehrichtung R beabstandeter Abschnitte des Lenkradkranzes 5 abweichen. Es ist aber auch möglich, dass die Konturen im Bereich der Anzeigeeinrichtung 8 mit den übrigen Konturen der Lenkradkranzabschnitte, die zur Anzeigeeinrichtung 8 entlang der Drehrichtung R beabstandet sind, im Wesentlichen identisch übereinstimmen. Alternativ zu den Schalenelementen S kann an dem Lenkradkranz 5 entlang der Anzeigeeinrichtung 8 auch eine Umschäumung des Lenkradkranzes 5 vorgesehen sein, die einen entsprechend ausgebildeten Bereich B zum Umlenken des Gassackes G aufweist.

Das in der Figur 11 gezeigte Schalenelement S weist in dem dem Nabenkörper 6 sowie einem Fahrer zugewandten Bereich B des Schalenelementes S eine konvexe Wölbung auf, die stärker gekrümmt ist als ein dem Bereich B zugewandter und gegenüberliegender Bereich des Lenkradkranzes 5, wobei im Gegensatz zur Figur 12 das im Querschnitt u-förmige Schalenelement S gemäß der Figur 11 im Bereich B eine stärkere Krümmung aufweist als in einem dem Bereich B entlang der Lenkachse D gegenüberliegenden Bereich des Schalenelementes S. Hierdurch besitzt das in der Figur 11 gezeigte Schalenelement S entlang der Lenkachse D eine geringere maximale Breite als der Lenkradkranz 5, so dass dieser entlang der Lenkachse D über das Schalenelement S hinausragt.

Die in der Figur 12 gezeigte Abwandlung des Schalenelementes S ist ebenfalls im Querschnitt u-förmig ausgebildet, d.h., konvex gekrümmt und entlang einer quer zur Lenkachse D verlaufenden Achse symmetrisch ausgebildet, wobei die maximale Breite dieses Schalenelementes S mit der des Lenkradkranzes 5 entlang der Lenkachse D betragsmäßig übereinstimmt. An den freien Enden des Schalenelementes S ist eine äußere dem Lenkradkranz 5 abgewandte Oberfläche des Schalenelementes S bündig in eine äußere (nach außen weisende) Oberfläche des Lenkradkranzes 5 eingepasst und verläuft tangential zu dieser, so dass ein glatter Übergang zwischen dem Schalenelement S und dem Lenkradkranz 5 sichergestellt ist. Dies ist vorteilhaft, da hierdurch von vornherein Kanten vermieden werden, die den Gassack G beim Auftreffen auf den Bereich B beschädigen könnten.

Entscheidend ist, dass beide Ausführungsformen des Schalenelementes S eine Wölbung derart aufweisen, dass der bezüglich der Lenkachse D geneigte (und quer zur Lenkachse D gekrümmte) Bereich B ausgebildet wird, der ein Ablenken bzw. Umlenken des sich entfaltenden Gassackes G sicherstellt. Es ist vorteilhaft, wenn die u-förmige Querschnittskontur der Schalenelemente S gemäß der Figur 11 bzw. 12 eine verrundete, im Wesentlichen auf den Nabenkörper 6 weisenden Spitze K aufweist, d.h., einen konvex gekrümmten Bereich aufweist, der dem Nabenkörper 6 zugewandt ist und die größte Krümmung der Querschnittskontur aufweist (die u-förmige Querschnittkontur des Schalenelementes S kann bspw. eine Halbellipse sein), wobei der Bereich B des Schalenelementes S entlang der Lenkachse D zwischen dieser Spitze K und einem Fahrer angeordnet ist. Hierdurch kann der sich entfaltende Gassack G vorteilhaft entlang der Lenkachse D durch den Bereich B abgelenkt werden.

Weiterhin können das oder die Schalenelemente S die Anzeigeinrichtung 8 teilweise oder vollständig überdecken und bei einer optischen Anzeigeeinrichtung 8 transparent ausgebildet sein. Alternativ hierzu können die Schalenelemente S entlang des Lenkradkranzes 5 rechts und links von einer am Lenkradkranz 5 angeordneten Anzeigeinrichtung 8 angeordnet sein, d.h., diese entlang des Lenkradkranzes 5 umgeben. Hierdurch wird die Anzeigeeinrichtung 8 geschützt, da die Schalenelemente S gemäß Figur 11 und 12 im Bereich B vom Lenkradkranz 5 abstehen und somit über eine in dem Lenkradkranz 5 angeordnete bzw. dort eingelassene Anzeigeeinrichtung 8 hinausragen, d.h., zwischen der Anzeigeeinrichtung 8 und einem sich entfaltenden Gassack G angeordnet sind. Diese Schutzfunktion wird durch die Neigung des Bereiches B in Bezug auf die Lenkachse D (d.h., der Bereich B bildet eine Ablenkschräge) und die Krümmung des Bereichs B, die ein Um- bzw. Ablenken eines sich entfaltenden Gassackes G gewährleistet, unterstützt.

## Patentansprüche

1. Lenkradbaugruppe für ein Kraftfahrzeug, mit:
- einem Lenkrad (5a),
- einer am Lenkrad (5a) angeordneten Anzeigeeinrichtung (8), die mit einer an dem Kraftfahrzeug anzuordnenden Sensoreinrichtung (E) zum Ermitteln mindestens einer Zustandsgröße eines Kraftfahrzeuges in Wirkverbindung steht und die zum Anzeigen der mittels der Sensoreinrichtung (E) ermittelten Zustandsgröße vorgesehen ist, wobei die Anzeigeeinrichtung (8) als eine optische Anzeige (1, 2, 3, 11) ausgebildet ist, die einen Bildschirm (3) aufweist, und wobei die Anzeigeeinrichtung (8) an einem Lenkradkranz (5) angeordnet ist, der eine Lenkachse (D) des Lenkrades (5a) zumindest abschnittsweise umläuft,
- einem um die Lenkachse (D) drehbaren Nabenkörper (6), der über zumindest eine Speiche (7) mit dem Lenkradkranz (5) verbunden ist, und
- einem Bereich (B) des Lenkradkranzes (5), der die zumindest eine Anzeigeeinrichtung (8) umfasst,
**dadurch gekennzeichnet,**
**dass** der Bildschirm (3) entlang des Lenkradkranzes (5) des Lenkrades (5a) zwischen zwei Anzeigeelementen der Anzeigeeinrichtung (8) angeordnet ist, die jeweils ein LED-Feld (2) oder mehrere LED-Felder (2) umfassen, und dass der Lenkradkranz (5) in dem Bereich (B) eine Verbreiterung aufweist, die durch einen in Richtung auf den Nabenkörper (6) vorstehenden Fortsatz des Lenkradkranzes (5) gebildet ist.

2. Lenkradbaugruppe nach Anspruch 1, **dadurch gekennzeichnet, dass** die Anzeigeeinrichtung (8) in einer Geradeausfahrtstellung des Lenkrades (5a) entlang der vertikalen Fahrzeugachse (z) oberhalb der Lenkachse (D) angeordnet ist.

3. Lenkradbaugruppe nach einem der vorangegangenen Ansprüche, **dadurch gekennzeichnet, dass** die Anzeigeeinrichtung (8) zum Anzeigen von Fahrinformationen eines Kraftfahrzeuges ausgebildet ist.

4. Lenkradbaugruppe nach einem der vorhergehenden Ansprüche, **dadurch gekennzeichnet, dass** die Anzeigeeinrichtung (8) mehrere LED-Felder (2) umfasst, die jeweils entlang der Drehrichtung (R) eines Lenkradkranzes (5) des Lenkrades (5a) erstreckt sind.

5. Lenkradbaugruppe nach Anspruch 4, **dadurch gekennzeichnet, dass** die LED-Felder (2) jeweils zeilenförmig ausgebildet sind.

6. Lenkradbaugruppe nach Anspruch 4 oder 5, **dadurch gekennzeichnet, dass** die Längserstreckung der LED-Felder (2) entlang der Drehrichtung (R) mit zunehmendem radialen Abstand zum Nabenkörper (6) des Lenkrades wächst.

7. Lenkradbaugruppe nach einem der Ansprüche 4 bis 6, **dadurch gekennzeichnet, dass** an einander abgewandten Seiten der beiden LED-Felder (2) jeweils zusätzliche LED-Felder (11) angeordnet sind, die auf der Oberseite des Lenkradkranzes (5) quer zur Drehrichtung (R) des Lenkradkranzes (5) verlaufen.

8. Lenkradbaugruppe nach einem der vorhergehenden Ansprüche, **dadurch gekennzeichnet, dass** mit der Sensoreinrichtung (E) eine Funktionseinheit des Kraftfahrzeuges zum Weiterleiten oder Umwandeln von Energie und/oder Informationen gekoppelt ist und die Funktionseinheit dazu eingerichtet und vorgesehen ist, einem Fahrer über die Anzeigeeinrichtung (8) einen Vorschlag für eine Einstellung einer Zustandsgröße des Kraftfahrzeuges anzuzeigen, und wobei der Funktionseinheit eine Betätigungseinheit (17, 18, 19) des Kraftfahrzeuges zugeordnet ist, mit der gemäß des Vorschlages der Funktionseinheit die Zustandsgröße einstellbar ist.

9. Lenkradbaugruppe nach einem der Ansprüche 4 bis 8, **gekennzeichnet durch** ein am Nabenkörper (6) angeordnetes Gassackmodul, mit einem Gassack (G), der zum Schutz des Fahrers in einer entlang der Lenkachse (D) verlaufenden Hauptentfaltungsrichtung entfaltbar ist und beim Entfalten quer zur Lenkachse (D) gegen den Bereich (B) des Lenkradkranzes (5) stoßen kann.

10. Lenkradbaugruppe nach Anspruch 9, **dadurch gekennzeichnet, dass** der Bereich (B) des Lenkradkranzes (5) derart mit dem Gassack (G) zusammenwirkt, dass dieser beim Stoßen gegen den Bereich (B) in der Hauptentfaltungsrichtung abgelenkt wird, wobei der Bereich (B) zum Ablenken des sich entfaltenden Gassackes (G) insbesondere eine Ablenkschräge aufweist.

## Claims

1. A steering wheel assembly for a motor vehicle, comprising:
- a steering wheel (5a),
- a display means (8) arranged on the steering wheel (5a), which is operatively connected with a sensor means (E) to be arranged at the motor vehicle for determining at least one state variable of a motor vehicle and which is provided for displaying the state variable determined by means of the sensor means (E), wherein the display means (8) is formed as an optical display (1, 2, 3, 11) which includes a screen (3), and wherein the display means (8) is arranged at a steering wheel rim (5) which at least partly extends around a steering axle (D) of the steering wheel (5a),
- a hub body (6) rotatable about the steering axle (D), which is connected with the steering wheel rim (5) via at least one spoke (7), and
- a region (B) of the steering wheel rim (5) which comprises the at least one display means (8),
**characterized in**
**that** the screen (3) is arranged along the steering wheel rim (5) of the steering wheel (5a) between two display elements of the display means (8), which each comprise one LED field (2) or several LED fields (2), and that the steering wheel rim (5) includes a broadening in the region (B), which is formed by an extension of the steering wheel rim (5) protruding in direction of the hub body (6).

2. The steering wheel assembly according to claim 1, **characterized in that** in a straight-ahead position of the steering wheel (5a) the display means (8) is arranged along the vertical vehicle axis (z) above the steering axle (D).

3. The steering wheel assembly according to any of the preceding claims, **characterized in that** the display means (8) is formed for displaying driving information of a motor vehicle.

4. The steering wheel assembly according to any of the preceding claims, **characterized in that** the display means (8) comprises several LED fields (2) which each are extended along the direction of rotation (R) of a steering wheel rim (5) of the steering wheel (5a).

5. The steering wheel assembly according to claim 4, **characterized in that** the LED fields (2) each are formed line-shaped.

6. The steering wheel assembly according to claim 4 or 5, **characterized in that** the longitudinal extension of the LED fields (2) along the direction of rotation (R) grows with increasing radial distance to the hub body (6) of the steering wheel.

7. The steering wheel assembly according to any of claims 4 to 6, **characterized in that** on sides of the two LED fields (2) facing away from each other additional LED fields (11) each are arranged, which extend on the upper side of the steering wheel rim (5) transversely to the direction of rotation (R) of the steering wheel rim (5).

8. The steering wheel assembly according to any of the preceding claims, **characterized in that** a functional unit of the motor vehicle is coupled with the sensor means (E) for forwarding or converting energy and/or information and the functional unit is equipped and provided to display a proposal for an adjustment of a state variable of the motor vehicle to a driver via the display means (8), and wherein an actuating unit (17, 18, 19) of the motor vehicle is associated to the functional unit, with which the state variable is adjustable according to the proposal of the functional unit.

9. The steering wheel assembly according to any of claims 4 to 8, **characterized by** a gas bag module arranged at the hub body (6), comprising a gas bag (G) which can be deployed for the protection of the driver in a main direction of deployment extending along the steering axle (D) and on deployment can abut against the region (B) of the steering wheel rim (5) transversely to the steering axle (D).

10. The steering wheel assembly according to claim 9, **characterized in that** the region (B) of the steering wheel rim (5) cooperates with the gas bag (G) such that the same is deflected in the main direction of deployment when abutting against the region (B), wherein the region (B) in particular includes a deflection bevel for deflecting the deploying gas bag (G).

## Revendications

1. Ensemble relatif à un volant de direction pour un véhicule automobile, comprenant :
- un volant de direction (5a),
- un dispositif d'affichage (8) agencé sur le volant de direction (5a), qui est en liaison opérative avec un système capteur (E) destiné à être agencé sur le véhicule automobile pour déterminer au moins une grandeur d'état d'un véhicule automobile, et qui est prévu pour afficher la grandeur d'état déterminée au moyen du système capteur (E), le dispositif d'affichage (8) étant réalisé comme un affichage optique (1, 2, 3, 11) qui comprend un écran (3), et le dispositif d'affichage (8) étant agencé sur une couronne (5) du volant de direction, qui entoure au moins par secteur un axe de direction (D) du volant de direction (5a),
- un corps de moyeu (6), pivotant autour de l'axe de direction (D), qui est relié à la couronne (5) du volant de direction par au moins un rayon (7), et
- une zone (B) de la couronne (5) du volant de direction qui comprend ledit au moins un dispositif d'affichage (8),
**caractérisé en ce que** l'écran (3) est agencé le long de la couronne (5) du volant de direction (5a) entre deux éléments d'affichage du dispositif d'affichage (8) qui comprennent respectivement un champ de diode électroluminescente (2) ou plusieurs champs de diodes électroluminescentes (2), et **en ce que** la couronne (5) du volant de direction comporte dans la zone (B) un élargissement qui est formé par un prolongement de la couronne (5) du volant de direction dépassant en direction du corps de moyeu (6).

2. Ensemble relatif à un volant de direction selon la revendication 1, **caractérisé en ce que** le dispositif d'affichage (8) est agencé, dans la position du volant de direction (5a) pour la circulation en ligne droite, le long de l'axe vertical du véhicule (z) au-dessus de l'axe de direction (D).

3. Ensemble relatif à un volant de direction selon l'une quelconque des revendications précédentes, **caractérisé en ce que** le dispositif d'affichage (8) est réalisé pour afficher des informations de conduite d'un véhicule automobile.

4. Ensemble relatif à un volant de direction selon l'une quelconque des revendications précédentes, **caractérisé en ce que** l'affichage optique (8) comprend plusieurs champs de diodes électroluminescentes (2) qui sont respectivement étendus le long du sens de rotation (R) d'une couronne (5) du volant de direction (5a).

5. Ensemble relatif à un volant de direction selon la revendication 4, **caractérisé en ce que** les champs de diodes électroluminescentes (2) sont respectivement réalisés disposés en ligne.

6. Ensemble relatif à un volant de direction selon la revendication 4 ou 5, **caractérisé en ce que** l'étendue longitudinale des champs de diodes électroluminescentes (2) le long du sens de rotation (R) augmente en même temps que la distance radiale croît par rapport au corps de moyeu (6) du volant de direction.

7. Ensemble relatif à un volant de direction selon l'une quelconque des revendications 4 à 6, **caractérisé en ce que** des champs de diodes électroluminescentes (11) supplémentaires, qui s'étendent sur le côté supérieur de la couronne (5) du volant de direction transversalement au sens de rotation (R) de la couronne (5) de volant de direction, sont respectivement disposés sur des côtés éloignés des deux champs de diodes électroluminescentes (2).

8. Ensemble relatif à un volant de direction selon l'une quelconque des revendications précédentes, **caractérisé en ce qu'**une unité fonctionnelle du véhicule automobile est couplée au système capteur (E) pour transmettre ou convertir de l'énergie et/ou des informations, et l'unité fonctionnelle est configurée et prévue pour indiquer à un conducteur via le dispositif d'affichage (8) une proposition pour un réglage d'une grandeur d'état du véhicule automobile, et un dispositif d'actionnement (17, 18, 19) du véhicule automobile étant associé à l'unité fonctionnelle, au moyen duquel la grandeur d'état peut être réglée selon la proposition de l'unité fonctionnelle.

9. Ensemble relatif à un volant de direction selon l'une quelconque des revendications 4 à 8, **caractérisé par** un module de sac à gaz agencé sur le corps de moyeu (6), avec un sac à gaz (G) qui, pour protéger le conducteur, est déployable dans une direction de déploiement principale s'étendant le long de l'axe de direction (D) et qui, lors du déploiement transversalement à l'axe de direction (D) peut venir heurter contre la zone (B) de la couronne (5) du volant de direction.

10. Ensemble relatif à un volant de direction selon la revendication 9, **caractérisé en ce que** la zone (B) de la couronne (5) du volant de direction coopère avec le sac à gaz (G) de telle façon que celui-ci, lorsqu'il vient heurter contre la zone (B), est dévié dans la direction de déploiement principale, la zone (B) comprenant en particulier une pente de déviation pour faire dévier le sac à gaz qui se déploie (G).
